# EUROPÄISCHE PATENTSCHRIFT

(11) **EP 1 930 373 B1**
(45) Veröffentlichungstag und Bekanntmachung des Hinweises auf die Patenterteilung: **28.03.2018**
(21) Anmeldenummer: 07021718.7
(22) Anmeldetag: 08.11.2007
(51) Int. Cl.: C08L 77/06, C08G 69/26, C08G 69/36, G02B 1/04

(54) **Transparenter Formkörper aus einer Polyamidformmasse**
Transparent moulds made from polyamide moulding material
Corps moulé transparent issu d'une masse moulée en polyamide

(30) Priorität: 08.12.2006 DE 102006057957
(43) Veröffentlichungstag der Anmeldung: 11.06.2008
(73) Patentinhaber: EMS-CHEMIE AG, 7013 Domat-Ems (CH)
(72) Erfinder: Bühler, Friedrich Severin, 7430 Thusis (CH); Rytka, Christian, 7402 Bonaduz (CH)
(74) Vertreter: Pfenning, Meinig & Partner mbB

(56) Entgegenhaltungen:
- EP-A1- 0 603 813
- EP-A1- 0 837 087
- EP-A1- 1 369 447
- EP-A1- 1 712 581
- EP-A1- 1 845 123
- WO-A1-2007/087896
- WO-A2-02/090421
- US-B2- 7 014 315

## Beschreibung

Die vorliegende Erfindung betrifft transparente Formkörper, die aus ausgewählten Polyamidformmassen gebildet worden sind, deren physikalische Eigenschaften, insbesondere deren Transparenz und deren dynamische Resistenz, derjenigen von Polycarbonat überlegen sind. Die Formkörper der Erfindung erreichen zum Teil um das zigfache mehr Biegezyklen bei höherer Belastung als Polycarbonat, ohne dass Schädigungen im Formteil auftreten.

Transparente Formkörper aus Polyamid oder Polycarbonat sind im Stand der Technik bekannt. Für spezielle Anwendungsfälle, wie z.B. Brillengläser für rahmenlose Brillen, wird üblicherweise Polycarbonat verwendet, wobei die Brillengläser zur Verbindung mit den Brillenbügeln und der Nasenbrücke, z.B. Verschraubungen aufweisen.

An diesen Verbindungen entstehen insbesondere bei Polycarbonat jedoch mechanische Spannungsrisse, die bei dynamischer Biegebelastung zu Brüchen in der Linse führen können.

Zur Herstellung von rahmenlosen Brillen werden zahlreiche Konstruktionen zur Befestigung der Bügel und der Nasenbrücken an der Linse in der Literatur beschrieben. In allen Fällen wird dies mittels, z.B. Bohrungen, Sackbohrungen, Blindbohrungen, Buchsen oder Nuten in der Linse und Fixierung mit, z.B. Schrauben, Stiften, Bolzen, Klemmvorrichtungen oder Nylonfäden vorgenommen.

Die EP 1 630 590 beschreibt eine Befestigung von Brillenlinsen und eine Methode zur Reparatur von Linsen und Brillen. Diese kann auch bei Kunststofflinsen angewandt werden, wobei die Linse z.B. aus Polycarbonat, Acrylharz, Urethanharz und Polyamid bestehen kann. Genauere Angaben zu verwendbaren Polyamidtypen werden nicht gemacht. Auch werden keine Eigenschaften genannt, die das Polyamid erfüllen muss um als Linse für rahmenlose Brillen geeignet zu sein. Eine rahmenlose Brille ist in einer Prinzipzeichnung dargestellt.

Solche rahmenlosen Brillenkonstruktionen mit an der Linse fixierten Befestigungselementen wie Brillenbügel, Brücke oder Nasenstütze stellen sehr hohe Anforderungen an die dynamische Belastbarkeit des transparenten Werkstoffes. Diese können, wie aus der US 7,014,315 bekannt ist, von Polycarbonat, PMMA, CR39 (Duroplast auf Basis Dietylenglykol-bis-allylcarbonat) und Glas nur unbefriedigend erfüllt werden.

Die EP 1 845 123 A1 betrifft transparente, amorphe Polyamidformmassen, die durch Polykondensation von alyphatischen Dicarbonsäuren mit 17 bis 21 Kohlenstoffatomen mit MACM (bis-3-methylcycloshexyl)methan gebildet sind.

Aus der WO 2007/087896 A1 ist eine Polyamidformmasse bzw. Copolyamidformmasse bekannt, die zur Herstellung von heißdampf-sterilisierbaren, transparenten Formteilen und Extrudaten geeignet ist.

Aus der EP 0 603 813 A1 sind transparente Copolyamide bekannt, die aus langkettigen Monomeren mit 9 bis 12 Kohlenstoffatomen und aus Monomeren für teilaromatische Polyamide in statistischer Verteilung aufgebaut sind.

Die Aufgabe der vorliegenden Erfindung ist es daher, transparente Formkörper aus Polyamidformmassen zu entwickeln, die eine geringe Neigung zur Ausbildung von mechanischen Spannungsrissen bei dynamischer Belastung zeigen.

Diese Aufgabe wird mit dem transparenten Formkörper mit den Merkmalen des Anspruchs 1 gelöst. Die abhängigen Ansprüche stellen vorteilhafte Weiterbildungen dar. Verwendungszwecke werden in Anspruch 18 genannt.

Erfindungsgemäß wird ein transparenter Formkörper vorgeschlagen, der aus einer Polyamidformmasse gebildet ist, die mindestens ein Polyamid und/oder Blends hiervon mit einer Lichttransmission (Transparenz) von mindestens 75 % bei einer Schichtdicke von 2 mm, gemessen nach ASTM D 1003 sowie einer Wechselbiegeresistenz mit Fixierung von mind. 60.000 Messzyklen, gemessen nach ISO 178 mit einem speziellen Prüfkörper aufweist. Das mindestens eine Polyamid ist dabei bezogen auf 100 Mol-% Diamin aus
a) 15 bis 60 Mol-°/MACM (Dimethyl-4,4'-diaminodicyclohexylmethan) und
b) 40 bis 85 Mol-%HMDA (Hexamethylendiamin) und
c) 0 bis 20 Mol-%PACM (Bis(p-aminocyclohexyl)methan)
sowie bezogen auf 100-Mol% der Dicarbonsäuren aus
d) 40 bis 60 Mol-%IPS (Isophthalsäure) und
e) 40 bis 60 Mol-%TPS (Terephthalsäure)
wobei die Dicarbonsäuren bis zu maximal der Hälfte ihres molaren Gehaltes durch Naphthalindicarbonsäure ersetzt sein können,
sowie bis zu 10 Gew.-% bezüglich des Gesamtgewichtes der Polyamidformmasse aus einem Lactam und/oder einer α,ω-Aminosäure gebildet ist,
und/oder Blends hiervon.

Überraschenderweise wurde damit eine Kombination von Monomeren gefunden, die es erlaubt, Polyamidformmassen herzustellen, aus denen transparente Formkörper gebildet werden können, die die gestellte Aufgabe erfüllen. Dabei war es insbesondere überraschend, dass die Formkörper, z.B. beim Anwendungsfall Linse trotz Schwächung durch Schädigung des Materialgefüges der Linse durch, z.B. eine Bohrung, Sackbohrung, Blindbohrung, Buchse, Nut, gesägte, gefräste oder geschliffene Kanten mindestens 60.000 Biegezyklen erreichen.

Die in den transparenten Formkörpern enthaltenen Polyamidformmassen tolerieren konstruktive Schädigungen des Materialgefüges, die mit transparenten Werkstoffen bisher nur unbefriedigend möglich waren. Gleichzeitig bleibt die für Polyamid bekannte sehr gute chemische Resistenz erhalten.

Die erfindungsgemäßen, transparenten Formkörper besitzen außerdem eine gute Wärmeformbeständigkeit, Steifigkeit und Härte.

Die Formkörper zeigen eine hohe dynamische Belastbarkeit und sehr hohe Lichttransmission und eignen sich besonders zur Herstellung von korrigierenden und nicht korrigierenden Linsen, die vorzugsweise in rahmenlosen Brillen eingesetzt werden können.
f) Es ist dabei bevorzugt, wenn das mindestens eine Polyamid und/oder Blends hiervon bezogen auf 100 Mol-% Diamin 15 bis 55 Mol-%, bevorzugt 25 bis 50 Mol-%, besonders bevorzugt etwa 29 Mol-% MACM und 45 bis 85 Mol-%, bevorzugt 50 bis 75 Mol-%, besonders bevorzugt etwa 71 Mol-% HMDA und 0 bis 15 Mol-%, bevorzugt 0 bis 10 Mol-% PACM sowie bezogen auf 100-Mol% der Dicarbonsäuren aus 45 bis 55 Mol-%, bevorzugt etwa 50 Mol-% IPS und 45 bis 55 Mol-%, bevorzugt etwa 50 Mol-% TPS gebildet ist.

Eine weitere vorteilhafte Ausführungsform sieht vor, dass das mindestens eine Polyamid und/oder Blends hiervon bezogen auf 100 Mol-% Diamin aus etwa 39 Mol-% MACM und etwa 52 Mol-% HMDA und etwa 9 Mol-% PACM sowie bezogen auf 100-Mol% der Dicarbonsäuren aus etwa 50 Mol-% IPS und etwa 50 Mol-% TPS gebildet ist.

Insbesondere sehen diese Ausführungsformen vor, dass bis zu 10 Gew.-%, bevorzugt 0,5 bis 10 Gew.-%, besonders bevorzugt 0,5 bis 8 Gew.-%, ganz besonders bevorzugt 0,5 bis 6 Gew.-% bezüglich des Gesamtgewichtes der Polyamidformmasse aus einem Lactam und/oder einer α,ω-Aminosäure gebildet ist.

In eine speziellen Ausführungsform ist etwa 4,6 Gew.-% bezüglich des Gesamtgewichtes der Polyamidformmasse aus einem Lactam und/oder einer α,ω-Aminosäure gebildet.

In einer anderen speziellen Ausführungsform ist etwa 3 Gew.-% bezüglich des Gesamtgewichtes der Polyamidformmasse aus einem Lactam und/oder einer α,ω-Aminosäure gebildet.

Vorteilhafterweise ist das Lactam und/oder die α,ω-Aminosäure LC 11, LC 12, α,ω-Aminoundecansäure und/oder α,ω-Aminododecansäure.

Ausführungsformen, bei denen das mindestens eine Polyamid und/oder Blends hiervon gleiche Anteile an IPS und TPS besitzt, sind besonders bevorzugt.

Bei den zuvor genannten Formkörpern können die Dicarbonsäuren bis zu maximal der Hälfte ihres molaren Gehaltes durch Naphthalindicarbonsäure, bevorzugt durch 2,6-Naphthalindicarbonsäure ersetzt sein.

Bei den vorstehend genannten Formulierungen können der Gehalt an Dicarbonsäure und/oder der Gehalt an Diaminen auch jeweils geringfügig größer oder kleiner als 100 Mol-% sein. Unter geringfügig wird eine Abweichung von ± 5 Mol-% verstanden.

Die erfindungsgemäßen Formkörper zeichnen sich durch exzellente optische und mechanische Eigenschaften aus. Der Formkörper weist bevorzugt eine Lichttransmission von mind. 88 %, bevorzugt mind. 90 %, besonders bevorzugt von mindestens 91 %, ganz besonders bevorzugt von mindestens 92 % bei einer Schichtdicke von 2 mm, gemessen nach ASTM 1003 auf. Weiterhin beträgt die bevorzugte Wechselbiegeresistenz mit Fixierung mind. 75.000 Messzyklen, besonders bevorzugt mind. 100.000 Messzyklen, ganz besonders bevorzugt mind. 140.000 Messzyklen gemessen nach ISO 178 mit einem speziellen Prüfkörper (wie er nachfolgend bei den Beispielen beschrieben ist).

Insbesondere zeichnen sich die erfindungsgemäßen Formkörper durch einen Brechungsindex von 1,490 - 1,75, bevorzugt von 1,550 - 1,75, besonders bevorzugt von 1,570 - 1,75 aus. Als weiteres günstiges Merkmal des Formkörpers ist eine Abbe-Zahl von mindestens 25, bevorzugt mindestens 27, besonders bevorzugt mindestens 28 zu nennen. Zudem kann der Formkörper gefärbt sein. Ebenso kann der Formkörper eine optisch aktive Beschichtung und/oder eine Schutzbeschichtung aufweisen.

Weiterhin kann der Formkörper die dem Fachmann bekannten Zusatzstoffe zur Einstellung gewünschter Eigenschaften beinhalten. Insbesondere sind die Zusatzstoffe dabei ausgewählt aus der Gruppe bestehend aus Kondensationskatalysatoren, Kettenreglern, Entschäumern, Stabilisatoren, Gleitmittel, Farbstoffe, photochromen Additive, Antistatika, Entformungsmittel, optischen Aufheller, natürlichen Schichtsilikate, synthetischen Schichtsilikate oder Gemische der genannten Zusatzstoffe enthält.

Insbesondere ist der erfindungsgemäße transparente Formkörper ein optischer Formkörper. Unter einem optischen Formkörper ist ein Formkörper zu verstehen, der eine Wechselwirkung, z.B. absorbierende, brechende, streuende, reflektierende Wechselwirkung, mit elektromagnetischer Strahlung mit einer Wellenlänge im Bereich von 180 nm - 1200 nm eingeht. Optische Formkörper sind auch Formkörper, die z.B. in optischen Instrumenten oder optischen Systemen Verwendung finden.

Mit den zuvor genannten Formkörpern können auch transparente Formkörper mit hoher Steifigkeit, hoher chemischer Resistenz, hoher dynamischer Belastbarkeit und hoher Spannungsrissresistenz und hoher Wärmeformbeständigkeit zur Verfügung gestellt werden.

Diese Eigenschaften erfüllen gleichzeitig die hohen Anforderungen von Filtertassen in den häuslichen oder gewerblichen Trinkwasserkreisläufen oder Druckluftsystemen, in denen infolge abrupter Druckänderungen sehr viele Druck-Schwell-Zyklen bei hoher Berstfestigkeit bewältigt werden müssen.

Ebenso eignen sich die erfindungsgemäßen Formkörper für Einsätze mit hoher dynamischer Belastbarkeit und hoher chemischer Resistenz, insbesondere für korrigierende Linsen, nicht korrigierende Linsen, Linsen für rahmenlose Brillen, rahmenlose Brillen, Brillengestelle, Sonnenbrillen, Korrekturbrillen, Sicherheitsbrillen, Skibrillen, Motorradbrillen, Schutzbrillen, Visiere, Helmvisiere, Abdeckungen, Sichtscheiben, Schutzschilde, Schutzscheiben, Kameralinsen, Lupen, Prismen, Fahrzeugverkleidung, Spiegel, Durchflussmesser, Filtertassen, Tauchcomputer, Uhrengehäuse, Handygehäuse und Displays, Bildschirmfolien, Polarisationsfolien, Behälter, Fettbehälter, Verpackung, Autoscheiben, Lichtleiter, Lichtleitteile, Lampenabdeckung, Dekorationsgegenstände und andere transparente Teile, die diese Eigenschaften erfordern.

Ebenso eignen sich die erfindungsgemäßen Formkörper für Einsätze mit hoher dynamischer Belastbarkeit und hoher chemischer Resistenz und hoher Härte insbesondere für nagetierfeste Rohre, Leitungen, Ummantelung für Elektrokabel, Filmscharniere, Schutzfolien, Kabelbinder, Konnektoren, optische Lichtleiter.

Die Polyamidformmassen für die erfindungsgemässen Formkörper eignen sich auch zur Herstellung von Formkörpern bei denen die Schwächung des Materialgefüges von, z.B. Bindenähten oder Schweissnähten herrührt.

### 1.) Allgemeine Herstellungsvorschrift

Die Erfindung wird nachfolgend anhand von Beispielen und Versuchsergebnissen näher beschrieben, ohne die Erfindung auf die genannten speziellen Merkmale zu beschränken.

Die Herstellung der Polyamide erfolgt in an sich bekannter Weise in bekannten rührbaren Druckautoklaven mit einem Vorlagegefäß und einem Reaktionsgefäß:

Im Vorlagegefäß wird deionisiertes Wasser vorgelegt und die Monomere und Additive zugegeben. Danach wird mehrfach mit Stickstoff inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischem Druck für 0.5 bis 1 Stunden auf einer Temperatur von 270 bis 340 °C gehalten.

Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoff auf einen Wassergehalt von unter 0.1 Gew.-% getrocknet.

Das Polyamid hat eine relative Viskosität (gemessen bei 20 °C in 0,5 Gew.-%-iger Lösung in m-Kresol) von 1,43 - 2,15, bevorzugt von 1,50 - 2,15, besonders bevorzugt 1,55 - 2,15.

Die Einstellung der relativen Viskosität und damit der Molmasse kann in an sich bekannter Weise, z.B. über monofunktionelle Diamine oder Dicarbonsäuren, oder difunktionelle Diamine oder Dicarbonsäuren als Kettenregler erfolgen.

Die Glasübergangstemperatur des Polyamides (gemessen mittels DSC bei einer Aufheizrate von 20 °C/min nach der ISO-Norm 11357-1/-2) beträgt 120 °C - 180 °C, bevorzugt 140 °C - 175 °C, besonders bevorzugt 150 °C - 174 °C.

Der Zug-E-Modul des Polyamids (gemessen nach ISO 527 am ISO-Zugstab) beträgt 1500 bis 3600 MPa, bevorzugt 2000 bis 3500 MPa, besonders bevorzugt 2500 bis 3400 MPa.

Das getrocknete Granulat kann in einer Spritzgussmaschine bei Zylindertemperaturen zwischen 260 und 350 °C und Werkzeugtemperaturen zwischen 60 und 120 °C zu transparenten Formteilen verarbeitet werden.

Als Blendkomponente kann ein oder mehrere Polymere aus der Gruppe enthaltend PA 6, PA 66, PA 69, PA 610, PA 612, PA 614, PA 66/6, PA 6/12, PA 11, PA 12, PA 912, PA 1212, Polyesteramide, Polyetheramide, bevorzugt aus der Gruppe enthaltend PA 6, PA 612, PA 614, PA 6/12, PA 11, PA12, Polyesteramide, Polyetheramide ausgewählt werden.

### 2.) Messung der dynamischen Belastbarkeit mittels Biegetest mit Fixierung bei Mehrfachbelastung

Die Messung wird an 100x80x2 mm Platten vorgenommen, wobei an der zum Filmanguss entgegengesetzten Seite ein 25 mm breiter Streifen abgesägt und in der Mitte mit einem 3 mm Bohrloch versehen wird. Die gesägte Kante wird durch Abschleifen entgratet und geglättet, z.B. mit einem Bandschleifgerät und einem Zirkon-Korundpolyesterband der Körnung 100. Auf beiden Seiten der Platte werden Beilagscheiben (Durchmesser 9 mm, Dicke 2 mm) aus Gummi aufgelegt und eine 3 mm Schraube mit Mutter so angezogen, dass die Platte gerade noch um die Schraube bewegt werden kann.

Diese Platte 80x25x2 mm mit Bohrung und Schraube und gesägter Kante wird in einen Biege-Apparat waagerecht auf beiden Enden aufgelegt und nach ISO 178 geprüft. Ein Stempel drückt dazu von oben auf die Schraube, so dass eine Durchbiegung von 4 mm entsteht. Diese Biegung von 0 mm bis 4 mm und zurück zu 0 mm wird als Zyklus bezeichnet und mit der Frequenz 1 Hz solange wiederholt, bis der Prüfkörper Risse zeigt.

Die zur Durchbiegung aufzuwendende Kraft (Biegelast) ist von der Steifigkeit des Materials abhängig und sinkt sobald Risse im Prüfkörper vorhanden sind.

Im Gegensatz zum bekannten Wechselbiegetest findet beim hier angewendeten Biegetest mit Fixierung bei Mehrfachbelastung die Auslenkung nur von der Nulllage in eine Richtung statt, wohingegen beim Wechselbiegetest von der Nulllage aus in zwei entgegengesetzte Richtungen ausgelenkt wird. Der hier verwendete Biegetest stellt außerdem aufgrund der Schwächung des Materialgefüges des Prüfkörpers durch die Bohrung und die gesägte und geschliffene Kante deutlich höhere Anforderungen an das Material.

Überraschenderweise hat sich gezeigt, dass transparente Formkörper aus Polyamid mit höherer Steifigkeit als Polycarbonat und damit höheren Biegelasten deutlich mehr Biegezyklen erreichen als ein Polycarbonat mit geringeren Biegelasten.

Das Abschneiden eines Materials beim Biegetest mit Fixierung kann nicht aus der Schlagzähigkeit oder Kerbschlagzähigkeit des Materials hergeleitet werden.

Die Messungen wurden nach folgenden Normen und an folgenden Prüfkörpern durchgeführt.

Zug-E-Modul:
ISO 527 mit einer Zuggeschwindigkeit von 1 mm/min ISO-Zugstab , Norm: ISO/CD 3167, Typ A1, 170 x 20/10 x 4 mm, Temperatur 23 °C

Reißfestigkeit und Reißdehnung:
ISO 527 mit einer Zuggeschwindigkeit von 50 mm/min ISO-Zugstab, Norm: ISO/CD 3167, Typ A1, 170 x 20/10 x 4 mm, Temperatur 23 °C

Schlagzähigkeit nach Charpy:
ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Biegefestigkeit mit Fixierung:
ISO 178
Prüfkörper siehe 2.) Messungen
Temperatur 23 °C
Auslenkung 4 mm
Die Messung der Biegefestigkeit mit Fixierung bei Mehrfachbelastung wurde auf einem Gerät der Fa. Dyna-Mess (Achen), CIMTronic 2000 nach ISO 178 durchgeführt. Die Biegebelastung wird bei einer Auslenkung von 4 mm von der Nulllage (= 0 mm) bis 4 mm mit der Frequenz 1 Hz wiederholt. Einem Zyklus entspricht die Bewegung von der Nulllage zum Punkt 4 mm und zurück zur Nulllage. Angegeben wird die Anzahl der Zyklen bis zur sichtbaren Bildung von Rissen im Prüfkörper, was auch durch eine markante Änderung der Tangentensteigung der aufzuwendenden Kraft angezeigt wird.

Glasumwandlungstemperatur (Tg)
ISO-Norm 11357-1/-2
Granulat
Die Differential Scanning Calorimetry (DSC) wurde mit Aufheizrate von 20 °C/min durchgeführt. Angegeben wird die Temperatur für den Onset.

Lichttransmission:
ASTM D 1003
Rundplatte, Dicke 2 mm, Radius 37,5 mm Temperatur 23 °C
Messgerät Haze Gard plus der Firma Byk Gardner mit CIE Lichtart C. Der Lichttransmissionswert wird in % der eingestrahlten Lichtmenge angegeben.

Brechungsindex (Brechzahl) und Abbe-Zahl
DIN 53491
Rundplatte, Dicke 2 mm, Radius 37,5 mm Temperatur 20 °C
Brechungsindex n_{D}²⁰: Messung bei der Standardwellenlänge - der gelben D-Linie des Natriums - bei 20 °C.

Relative Viskosität:
ISO 307, 0,5 Gew.-%-ige m-Kresollösung
Temperatur 20 °C
Berechnung der relativen Viskosität (RV) nach RV = t/t₀ in Anlehnung an Abschnitt 11 der Norm.

Alle Prüfkörper werden im trockenen Zustand verwendet. Dazu werden die Prüfkörper nach dem Spritzguss mindestens 48 h bei Raumtemperatur in trockener Umgebung gelagert.

Die Norm-Prüfkörper wurden auf einer Spritzgussmaschine der Firma Arburg, Modell Allrounder 320-210-750 Hydronica hergestellt, wobei abhängig vom zu verarbeitenden Material und herzustellendem Prüfkörper Zylindertemperaturen zwischen 260 und 350 °C und Werkzeugtemperaturen zwischen 60 und 120 °C verwendet wurden. Für die Herstellung der Rundplatten zur Messung der optischen Eigenschaften Lichttransmission, Brechungsindex und Abbe-Zahl wird ein poliertes Werkzeug verwendet.

### 3.) Ergebnisse

In Tabelle 1 werden die in den Beispielen verwendeten Monomere charakterisiert.

**Tabelle 1**

| **Monomer** | **Handelsprodukt** | **Schmelzpunkt [°C]** | **Sublimationstemperatur [°C]** | **Hersteller** |
|---|---|---|---|---|
| MACM | Laromin C260 | - 7 bis - 1 | - | BASF AG |
| PACM | Dicycan | 33.5 bis 44 | - | BASF AG |
| IPS | Purified Isophthalic Acid (PIA) | 345 bis 348 | 100 bei 0.07 mmHg | BP Amoco Chemical |
| TPS | Amoco TA-33 | 427 | 402°C | BP Amoco Chemical |
| DDS | Dodecandisäure | 130 | - | Du Pont |
| Lactam 12 | Laurinlactam | 153 | - | EMS-CHEMIE AG |

Tabelle 2 gibt beispielhafte, erfindungsgemäße Zusammensetzungen sowie deren hervorragende Eigenschaften an.

**Tabelle 2**

| **Beispiele** | | **Nummer** | | | | | |
|---|---|---|---|---|---|---|---|
| **Komponenten** | **Einheit** | **1⁺** | **2⁺** | **3** | **4** | **5** | **6⁺** |
| MACM | Mold-%* | - | 100 | 16 | 29 | 39 | 29 |
| HMD | Mold-%* | 100 | - | 84 | 71 | 52 | - |
| PACM | Mol-%* | - | - | - | - | 9 | 71 |
| IPS | Mol-%** | 66,7 | - | 50 | 50 | 50 | - |
| TPS | Mol-%** | 33,3 | - | 50 | 50 | 50 | - |
| DDS | Mol-%** | - | 100 | - | - | - | 100 |
| Lactam 12 | Gew.-%*** | - | - | 5 | 4,6 | 3 | - |
| **Tests** | | **1** | **2** | **3** | **4** | **5** | **6** |
| RV | - | 1,45 | 1, 73 | 1,78 | 1,57 | 1,71 | 1, 85 |
| Tg | °C | 125 | 153 | 152 | 167 | 159 | 145 |
| Zug-E-Modul | MPa | 2900 | 1600 | 2650 | 2700 | 2700 | 1500 |
| Reissfestigkeit | MPa | 85 | 60 | 65 | 75 | 70 | 60 |
| Reissdehnung | % | 5 | 150 | 20 | 90 | 20 | 60 |
| Schlag Charpy New 23 °C | kJ/m2 | oB | oB | oB | oB | oB | oB |
| Kerbschlag Charpy New 23 °C | kJ/m2 | 4 | 9 | 10 | 9 | 10 | 13 |
| Biegetest mit Fixierung | Zyklen | 62000 | 200000 | 77000 | 110000 | 190000 | 170000 |
| resultierende Kraft beim Biegetest mit Fixierung | N | 90 | 45 | 75 | 90 | 70 | 60 |
| Lichttransmission | % | 92,5 | 93 | 92 | 93 | 92 | 94 |
| Abbe Zahl | - | 30 | 52 | 27 | 32 | 28 | 52 |
| Brechungsindex nD20 | - | 1,590 | 1, 510 | 1,582 | 1, 575 | 1, 584 | 1,510 |

| | | | | | | | |
|---|---|---|---|---|---|---|---|
| + = nicht erfindugsgemäß * bezogen auf 100 Mol-% Diamin ** bezogen auf 100 Mol-% Disäure *** bezogen auf die gesamte Formmasse | | | | | | | |

Tabelle 3 enthält die Vergleichsbeispiele 7 bis 12.

**Tabelle 3**

| **Vergleichsbeispiele** | | **Nummer** | | | | | |
|---|---|---|---|---|---|---|---|
| **Komponenten** | **Einheit** | **7** | **8** | **9** | **10** | **11** | **12** |
| Polymethylmethacrylat | Gew.-%*** | 100 a) | - | - | - | - | - |
| Polycarbonat | Gew.-%*** | - | 100 b) | 100 c) | - | - | - |
| MACM | Mol-%* | - | - | - | 15 | 100 | 100 |
| HMD | Mol-%* | - | - | - | 85 | - | - |
| PACM | Mol-%* | - | - | - | - | - | - |
| IPS | Mol-%** | - | - | - | 90 | 100 | 50 |
| TPS | Mol-%** | - | - | - | 10 | - | 50 |
| Lactam 12 | Gew.-%*** | - | - | - | - | 34 | 24 |
| **Tests** | | **7** | **8** | **9** | **10** | **11** | **12** |
| RV | - | - | - | - | 1,45 | 1, 55 | 1,53 |
| Tg | °C | 108 | 150 | 145 | 148 | 165 | 192 |
| Zug-E-Modul | MPa | 3700 | 2300 | 2400 | 3200 | 2300 | 2200 |
| Reissfestigkeit | MPa | 65 | 55 | - | 85 | 60 | 60 |
| Reissdehnung | % | 2,5 | 100 | > 50 | 16 | 60 | 50 |
| Schlag Charpy New 23 °C | kJ/m2 | 17 | oB | oB | 120 | oB | oB |
| Kerbschlag Charpy New 23 °C | kJ/m2 | 2 | 6 | 6 | 5 | 7 | 9 |
| Biegetest mit Fixierung | Zyklen | 1 | 1500 | 4000 | 20000 | 7000 | 8500 |
| resultierende Kraft beim Biegetest mit Fixierung | N | 50 | 85 | 60 | 85 | 75 | 100 |
| Lichttransmission | % | 93,5 | 92 | 89 | 92,5 | 93 | 93,5 |
| Abbe Zahl | - | 58 | 30 | 30 | 31 | 40 | 39 |
| Brechungsindex nD20 | - | 1, 490 | 1,585 | 1,585 | 1,585 | 1,537 | 1,543 |

| | | | | | | | |
|---|---|---|---|---|---|---|---|
| a) PMMA 8N b) Lexan 143 R c) Makrolon LQ 2647 * bezogen auf 100 Mol-% Diamin ** bezogen auf 100 Mol-% Disäure *** bezogen auf die gesamte Formmasse | | | | | | | |

### Abkürzungen

- DDS: Dodecandisäure
- IPS: Isophthalsäure
- Lactam 12: Laurinlactam
- MACM: Bis-(4-amino-3-methyl-cyclohexyl)methan
- oB: ohne Bruch
- PACM: Bis-(4-amino-cyclohexyl)methan
- Tg: Glasübergangstemperatur
- TPS: Terephthalsäure
- RV: relative Viskosität

Polycarbonat neigt zur schnellen Ausbildung von Mikrorissen, die bevorzugt an der gesägten Kante oder am Bohrloch entstehen, so dass Prüfkörper daraus beim Biegetest mit Fixierung nur 1500 bis 4000 Zyklen standhalten (Vergleichsbeispiele 8 und 9).

Prüfkörper aus den erfindungsgemäßen transparenten Polyamidformmassen halten bei diesem Test hingegen ohne erkennbare Schädigung und damit ohne Abfall der Biegebelastung mindestens 60.000 solcher Zyklen aus (Beispiele 3 - 5).

Prüfkörper aus Polymethylmethacrylat (PMMA, Vergleichsbeispiel 7) brechen bei diesem Test bereits beim ersten Biegezyklus. Polymethylmethacrylat ist damit für diese dynamischen Belastungen völlig ungeeignet.

Prüfkörper aus der erfindungsgemäßen Polyamidformmasse in Beispiel 2 halten bei diesem Test 200000 Zyklen ohne jede Zerstörung.

Prüfkörper aus der erfindungsgemäßen Polyamidformmasse in Beispiel 4 halten bei diesem Test 110000 Zyklen ohne jede Zerstörung, obwohl deren Steifigkeit höher ist als diejenige der Prüfkörper aus Polycarbonat.

Besonders widerstandsfähig gegenüber der dynamischen Belastung beim Biegetest mit Fixierung zeigen sich die Prüfkörper aus der erfindungsgemäßen Formmasse in Beispielen 5 190000, welche ohne jegliche Beeinträchtigung des Prüfkörpers absolviert werden.

## Patentansprüche

1. Transparenter Formkörper, gebildet aus einer Polyamidformmasse, enthaltend mindestens ein Polyamid mit einer Lichttransmission von mindestens 75 % bei einer Schichtdicke von 2 mm, gemessen nach ASTM D 1003 sowie einer Resistenz im Biegetest mit Fixierung von mind. 60.000 Messzyklen, gemessen nach ISO 178 mit einem speziellen Prüfkörper wie in [0047] und [0048] der Offenlegungsschrift EP 1 930 373 A2 beschrieben, **dadurch gekennzeichnet,**
**dass** das mindestens eine Polyamid bezogen auf 100 Mol-% Diamin aus
a) 15 bis 60 Mol-%MACM (Bis-(4-amino-3-methyl-cyclohexyl)-methan) und
b) 40 bis 85 Mol-%HMDA (Hexamethylendiamin) und
c) 0 bis 20 Mol-%PACM (Bis-(4-aminocyclohexyl)methan) sowie bezogen auf 100-Mol% der Dicarbonsäuren aus
d) 40 bis 60 Mol-%IPS (Isophthalsäure) und
e) 40 bis 60 Mol-%TPS (Terephthalsäure)
wobei die Dicarbonsäuren bis zu maximal der Hälfte ihres molaren Gehaltes durch Naphthalindicarbonsäure ersetzt sein können,
sowie bis zu 10 Gew.-% bezüglich des Gesamtgewichtes der Polyamidformmasse aus einem Lactam und/oder einer α,ω-Aminosäure gebildet ist,
und/oder Blends hiervon.

2. Formkörper nach Anspruch 1, **dadurch gekennzeichnet, dass** das mindestens eine Polyamid bezogen auf 100 Mol-% Diamin aus
a) 15 bis 55 Mold-% MACM und
b) 45 bis 85 Mol-% HMDA und
c) 0 bis 15 Mol-% PACM
sowie bezogen auf 100-Mol% der Dicarbonsäuren aus
d) 45 bis 55 Mol-% IPS und
e) 45 bis 55 Mol-% TPS
wobei die Dicarbonsäuren bis zu maximal der Hälfte ihres molaren Gehaltes durch Naphthalindicarbonsäure ersetzt sein können.

3. Formkörper nach einem der vorhergehenden Ansprüche, **dadurch gekennzeichnet, dass** das mindestens eine Polyamid bezogen auf 100 Mold-% Diamin aus
a) 29 Mold-% MACM und
b) 71 Mol-% HMDA
sowie bezogen auf 100-Mol% der Dicarbonsäuren aus
c) 50 Mol-% IPS und
d) 50 Mol-% TPS
gebildet ist.

4. Formkörper nach einem der Ansprüche 1 oder 2, **dadurch gekennzeichnet, dass** das mindestens eine Polyamid bezogen auf 100 Mol-% Diamin aus
a) 39 Mol-% MACM und
b) 52 Mol-% HMDA und
c) 9 Mol-% PACM
sowie bezogen auf 100-Mol% der Dicarbonsäuren aus
d) 50 Mol-% IPS und
e) 50 Mol-% TPS
gebildet ist.

5. Formkörper nach einem der Ansprüche 1 bis 4, **dadurch gekennzeichnet, dass** 0,5 bis 8 Gew.-% bezüglich des Gesamtgewichtes der Polyamidformmasse aus einem Lactam und/oder einer α,ω-Aminosäure gebildet ist.

6. Formkörper nach einem der Ansprüche 1 bis 5, **dadurch gekennzeichnet, dass** 4,6 Gew.-% oder 3 Gew.-% bezüglich des Gesamtgewichtes der Polyamidformmasse aus einem Lactam und/oder einer α,ω-Aminosäure gebildet ist.

7. Formkörper nach einem der Ansprüche 1 bis 6, **dadurch gekennzeichnet, dass** das Lactam und/oder die α,ω-Aminosäure LC 11, LC 12, α,ω-Aminoundecansäure und/oder α,ω-Aminododecansäure ist.

8. Formkörper nach einem der vorhergehenden Ansprüche, **dadurch gekennzeichnet, dass** die Dicarbonsäuren bis zu maximal der Hälfte ihres molaren Gehaltes durch 2,6-Naphthalindicarbonsäure ersetzt sind.

9. Formkörper nach einem der vorhergehenden Ansprüche, **gekennzeichnet durch** eine Lichttransmission von mind. 88 %bei einer Schichtdicke von 2 mm, gemessen nach ASTM D 1003.

10. Formkörper nach einem der vorhergehenden Ansprüche, **dadurch gekennzeichnet, dass** die Resistenz im Wechselbiegetest mit Fixierung mind. 75.000 Messzyklen gemessen nach ISO 178 mit einem speziellen Prüfkörper beträgt.

11. Formkörper nach einem der vorhergehenden Ansprüche **gekennzeichnet durch** einen Brechungsindex von 1,490 - 1,75.

12. Formkörper nach einem der vorhergehenden Ansprüche **gekennzeichnet durch** eine Abbé-Zahl von mindestens 25.

13. Formkörper nach einem der vorhergehenden Ansprüche, **dadurch gekennzeichnet, dass** der Formkörper ein optischer Formkörper ist.

14. Formkörper nach vorhergehendem Anspruch, **dadurch gekennzeichnet, dass** der optische Formkörper eine Linse ist.

15. Formkörper nach einem der vorhergehenden Ansprüche, **dadurch gekennzeichnet, dass** er gefärbt ist.

16. Formkörper nach einem der vorhergehenden Ansprüche, **dadurch gekennzeichnet, dass** er eine optisch aktive Beschichtung und/oder eine Schutzbeschichtung aufweist.

17. Formkörper nach einem der vorhergehenden Ansprüche, **dadurch gekennzeichnet, dass** das mindestens eine Polyamid Zusatzstoffe ausgewählt aus der Gruppe bestehend aus Kondensationskatalysatoren, Kettenreglern, Entschäumern, Stabilisatoren, Gleitmittel, Farbstoffe, photochromen Additive, Antistatika, Entformungsmittel, optischen Aufheller, natürlichen Schichtsilikate, synthetischen Schichtsilikate oder Gemische der genannten Zusatzstoffe enthält.

18. Verwendung eines Formkörpers nach einem der vorhergehenden Ansprüche zur Herstellung von Linsen, Linsen für rahmenlose Brillen, rahmenlosen Brillen, Brillengestellen, Sonnenbrillen, Korrekturbrillen, Sicherheitsbrillen, Skibrillen, Motorradbrillen, Schutzbrillen, Visieren, Abdeckungen, Sichtscheiben, Helmvisieren, Schutzschilden, Schutzscheiben, Durchflussmessern, Filtertassen, Kameralinsen, Lupen, Prismen, Fahrzeugverkleidungen, Spiegeln, Uhrengehäusen, Handygehäusen, Tauchcomputern, Fettbehälter, Displays, Bildschirmfolien, Verpackungen, Behälter, Leitungen, Autoscheiben, Lichtleitern, Lichtleitteilen, Lampenabdeckungen und/oder Dekorationsgegenständen.

## Claims

1. Transparent mold, made of a polyamide molding material, containing at least one polyamide with a light transmission of at least 75% at a layer thickness of 2 mm, measured in accordance with ASTM D 1003 as well as a resistance in the bending test with fixation of at least 60,000 measurement cycles, measured in accordance with ISO 178 with a special test piece, as described in [0047] and [0048] of published patent application EP 1 930 373 A2;
**characterized in that**
the at least one polyamide is formed relating to 100 mol-% diamine from
a) 15 to 60 mol-% MACM (bis-(4-amino-3-methylcyclohexyl)-methane) and
b) 40 50 85 mol-% HMDA (hexamethylene diamine) and
c) 0 to 20 mol-% PACM (bis-(4-aminocyclohexyl)methane)
and relating to 100 mol-% dicarboxylic acids from
d) 40 to 60 mol-% IPS (isophthalic acid) and
e) 40 to 60 mol-% TPS (terephthalic acid)
Wherein the dicarboxylic acids can be replaced up to a maximum of the half of their molar content by naphthalene dicarboxylic acid, and up to 10 wt.-% in terms of the total weight of the polyamide molding material from a lactam and/or a α,ω-amino carboxylic acid, and/or blends thereof.

2. Mold according to claim 1, **characterized in that** the at least one polyamide is formed relating to 100 mol-% diamine is from
a) 15 to 55 mol-% MACM and
b) 45 to 85 mol HMDA and
c) 0 to 15 mol-%, PACM
and relating to 100 mol-% of the dicarboxylic acids from
d) 45 to 55 mol-% IPS and
e) 45 to 55 mol-% TPS,
wherein the dicarboxylic acids can be replaced up to a maximum of the half of their molar content by naphthalene dicarboxylic acid.

3. Mold according to one of the preceding claims, **characterized in that** the at least one polyamide and/or polyamide blends is formed relating to 100 mol-% diamine from
a) approx. 29 mol-% MACM and
b) approx. 71 mol-% HMDA
as well as relating to 100 mol-% of the dicarboxylic acids from
c) approx. 50 mol-% IPS and
d) approx. 50 mol-% TPS.

4. Mold according to one of claims 1 or 2, **characterized in that** the at least one polyamide and/or polyamide blends is formed relating to 100 mol-% diamine from
a) approx. 39 mol-% MACM and
b) approx. 52 mol-% HMDA and
c) approx. 9 mol-% PACM
as well as relating to 100 mol-% of the dicarboxylic acids from
d) approx. 50 mol-% IPS and
e) approx. 50 mol-% TPS.

5. Mold according to one of claims 1 to 4, **characterized in that** 0.5 to 8 wt.-% in terms of the total weight of the polyamide molding material is made of lactam and/or an α-/ω-amino acid.

6. Mold according to one of claims 1 to 5, **characterized in that** 4.6 wt.-% or 3 wt.-% in terms of the total weight of the polyamide molding material is made of a lactam and/or an α-/ω-amino acid.

7. Mold according to one of claims 1 to 6, **characterized in that** the lactam and/or the α-/ω-amino acid is LC 11, LC 12, α-/ω-amino undecane acid and/or α-/ω-amino dodecane acid.

8. Mold according to one of the preceding claims, **characterized in that** the dicarboxylic acids are replaced by 2,6 naphthalene dicarboxylic acid, for up to a maximum of half of their molar content.

9. Mold according to one of the preceding claims, **characterized by** a light transmission of at least 88%, at a layer thickness of 2 mm, measured in accordance with ASTM D 1003.

10. Mold according to one of the preceding claims, **characterized in that** the resistance in the alternating bend test with fixation is at least 75,000 measurement cycles, measured in accordance with ISO 178 with a special test piece.

11. Mold according to one of the preceding claims, **characterized by** a refractive index of 1.490 - 1.75.

12. Mold according to one of the preceding claims, **characterized by** an Abbe number of at least 25.

13. Mold according to one of the preceding claims, **characterized in that** the mold is an optical mold.

14. Mold according to the previous claim, **characterized in that** the optical mold is a lens.

15. Mold according to one of the preceding claims, **characterized in that** it is colored.

16. Mold with according to one of the preceding claims, **characterized in that** it has an optically active coating and/or a protective coating.

17. Mold according to one of the preceding claims, **characterized in that** the at least one polyamide contains additives selected from the group consisting of condensation catalysts, chain regulators, defoaming agents, stabilizers, lubricants, dyes, photochrome additives, antistatics, demolding agents, optical brighteners, natural phyllo silicates, synthetic phyllo silicates or mixtures of the named additives.

18. Use of a mold according to one of the preceding claims for the production of lenses, lenses for frameless glasses, frameless glasses, glasses frames, sunglasses, corrective glasses, safety glasses, ski glasses, motorcycle glasses, protective glasses, visors, helmet visors, coverings, viewing glasses, protective shields, protector caps, camera lenses, magnifying glasses, prisms, automotive coverings, mirrors, flow meters, filter cups, diving computers, watch housings, mobile phone housings and displays, monitor coatings, packaging, containers, pipes, automotive windshields, light conductors, light conductor parts, lamp shades and/or decorative objects.

## Revendications

1. Objet moulé transparent, formé à partir d'un mélange à mouler de polyamides, contenant au moins un polyamide ayant un facteur de transmission de la lumière d'au moins 75 % pour une épaisseur de couche de 2 mm, mesuré selon ASTM D 1003, ainsi qu'une résistance dans un essai de flexion avec fixation d'au moins 60 000 cycles de mesure, mesurée selon ISO 178 avec une éprouvette spéciale telle que décrite aux paragraphes [0047] et [0048] du fascicule de demande Offenlegungschrift EP 1 930 373 A2,
**caractérisé en ce que**,
l'au moins un polyamide est constitué, pour 100 % en moles de diamine,
a) de 15 à 60 % en moles de MACM (bis(4-amino-3-méthyl-cyclohexyl)-méthane) et
b) de 40 à 85 % en moles de HMDA (hexaméthylènediamine) et
c) de 0 à 20 % en moles de PACM (bis(4-aminocyclohexyl)méthane,
ainsi que, pour 100 % en moles des acides carboxyliques,
d) de 40 à 60 % en moles d'IPS (acide isophtalique) et
e) de 40 à 60 % en moles de TPS (acide téréphtalique)
les acides carboxyliques pouvant, jusqu'au maximum la moitié de leur proportion en moles, être remplacés par de l'acide naphtalènedicarboxylique,
ainsi que d'une quantité allant jusqu'à 10 % en poids, par rapport au poids total du mélange à mouler de polyamides, d'un lactame et/ou d'un acide α,ω-aminé,
et/ou de mélanges de ceux-ci.

2. Objet moulé selon la revendication 1, **caractérisé en ce que** l'au moins un polyamide est, pour 100 % en moles de diamine, constitué
a) de 15 à 55 % en moles de MACM, et
b) de 45 à 85 % en moles de HMDA, et
c) de 0 à 15 % en moles de PACM,
ainsi que, pour 100 % en moles des acides dicarboxyliques,
d) de 45 à 55 % en moles d'IPS, et
e) de 45 à 55 % en moles de TPS,
les acides carboxyliques pouvant, jusqu'au maximum la moitié de leur proportion en moles, être remplacés par de l'acide naphtalènedicarboxylique.

3. Objet moulé selon l'une des revendications précédentes, **caractérisé en ce que** l'au moins un polyamide est, pour 100 % en moles de diamine, constitué
a) de 29 % en moles de MACM, et
b) de 71 % en moles de HMDA,
ainsi que, pour 100 % en moles des acides dicarboxyliques,
c) de 50 % en moles d'IPS, et
d) de 50 % en moles de TPS.

4. Objet moulé selon l'une des revendications 1 ou 2, **caractérisé en ce que** l'au moins un polyamide est, pour 100 % en moles de diamine, constitué
a) de 39 % en moles de MACM, et
b) de 52 % en moles de HMDA, et
c) de 9 % en moles de PACM,
ainsi que, pour 100 % en moles des acides dicarboxyliques,
d) de 50 % en moles d'IPS, et
e) de 50 % en moles de TPS.

5. Objet moulé selon l'une des revendications 1 à 4, **caractérisé en ce que** 0,5 à 8 % en poids, par rapport au poids total du mélange à mouler de polyamides, sont constitués d'un lactame et/ou d'un acide α,ω-aminé.

6. Objet moulé selon l'une des revendications 1 à 5, **caractérisé en ce que** 4,6 % en poids ou 3 % en poids, par rapport au poids total du mélange à mouler de polyamides, sont constitués d'un lactame et/ou d'un acide α,ω-aminé.

7. Objet moulé selon l'une des revendications 1 à 6, **caractérisé en ce que** le lactame et/ou l'acide α,ω-aminé sont le LC 11, le LC 12, l'acide α,ω-amino-undécanoïque et/ou l'acide α,ω-aminododécanoïque.

8. Objet moulé selon l'une des revendications précédentes, **caractérisé en ce que** les acides dicarboxyliques sont, jusqu'à au maximum la moitié de leur proportion en moles, remplacés par de l'acide 2,6-naphtalènedicarboxylique.

9. Objet moulé selon l'une des revendications précédentes, **caractérisé par** un facteur de transmission de la lumière d'au moins 88 % pour une épaisseur de couche de 2 mm, mesuré selon ASTM D 1003.

10. Objet moulé selon l'une des revendications précédentes, **caractérisé en ce que** la résistance, dans l'essai de flexion alternée avec fixation, est d'au moins 75 000 cycles de mesure, mesurée selon ISO 178 avec une éprouvette spéciale.

11. Objet moulé selon l'une des revendications précédentes, **caractérisé par** un indice de réfraction de 1,490 à 1,75.

12. Objet moulé selon l'une des revendications précédentes, **caractérisé par** un nombre d'Abbe d'au moins 25.

13. Objet moulé selon l'une des revendications précédentes, **caractérisé en ce que** l'objet moulé est un objet moulé optique.

14. Objet moulé selon la revendication précédente, **caractérisé en ce que** l'objet moulé optique est une lentille.

15. Objet moulé selon l'une des revendications précédentes, **caractérisé en ce qu'**il est coloré.

16. Objet moulé selon l'une des revendications précédentes, **caractérisé en ce qu'**il présente un revêtement optiquement actif et/ou un revêtement de protection.

17. Objet moulé selon l'une des revendications précédentes, **caractérisé en ce que** l'au moins un polyamide contient des additifs choisis dans le groupe consistant en les catalyseurs de condensation, les régulateurs de chaîne, les antimousses, les stabilisants, les lubrifiants, les colorants, les additifs photochromes, les antistatiques, les agents de démoulage, les azurants optiques, les phyllosilicates naturels, les phyllosilicates synthétiques ou les mélanges des additifs mentionnés.

18. Utilisation d'un objet moulé selon l'une des revendications précédentes pour la fabrication de lentilles, de lentilles pour lunettes sans cadre, de lunettes sans cadre, de montures de lunettes, de lunettes de soleil, de lunettes correctrices, de lunettes de sécurité, de lunettes de ski, de lunettes de vélo, de visières, de couvercles, de voyants, de visières pour casque, de boucliers de protection, d'écrans de protection, de débitmètres, de bocaux filtrants, d'objectifs d'appareil photographique, de loupes, de prismes, de garnitures pour automobiles, de miroirs, de boîtiers de montres, de boîtiers pour téléphones mobiles, d'ordinateurs de plongée, de réservoirs de graisse, de dispositifs d'affichage, de films pour écrans, d'emballages, de récipients, de conduites, de vitrages pour automobiles, de guides d'ondes lumineuses, d'éléments de guides d'ondes lumineuses, de couvercles de lampe et/ou d'objets de décoration.
